(19) **Europäisches Patentamt / European Patent Office / Office européen des brevets**

(11) **EP 3 471 049 A1**

(12) **EUROPEAN PATENT APPLICATION**
published in accordance with Art. 153(4) EPC

(43) Date of publication:
17.04.2019 Bulletin 2019/16

(51) Int Cl.:
*G06Q 50/10* (2012.01)     *G06N 99/00* (2019.01)

(21) Application number: 17810135.8

(22) Date of filing: 29.05.2017

(86) International application number:
PCT/JP2017/019830

(87) International publication number:
WO 2017/212956 (14.12.2017 Gazette 2017/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 09.06.2016 JP 2016115080

(71) Applicant: Sony Corporation
Tokyo 108-0075 (JP)

(72) Inventors:
• FUJITA, Takuya
  Tokyo 108-0075 (JP)
• NARIHIRA, Takuya
  Tokyo 108-0075 (JP)
• NAKAMURA, Akira
  Tokyo 108-0075 (JP)

(74) Representative: MFG Patentanwälte
Meyer-Wildhagen Meggle-Freund
Gerhard PartG mbB
Amalienstraße 62
80799 München (DE)

(54) **INFORMATION PROCESSING DEVICE, INFORMATION PROCESSING METHOD, AND PROGRAM**

(57)     The present technology relates to an information processing apparatus, an information processing method, and a program capable of facilitating estimation of a difficulty level of a task.

The information processing apparatus includes an estimation unit that estimates a task difficulty level being a difficulty level of a task on the basis of information related to the task. The present technology can be applied to an information processing apparatus such as a server and a client, for example. Examples of such information processing apparatuses include portable information terminals such as smart phones, tablets, and mobile phones, as well as computers, wearable apparatuses, and the like.

*FIG. 3*

**Description**

TECHNICAL FIELD

The present technology relates to an information processing apparatus, an information processing method, and a program, and particularly relates to an information processing apparatus, an information processing method, and a program suitable for estimating a difficulty level of a task.

BACKGROUND ART

A technology for estimating time taken for the operator to weld a component of a given weight on the basis of an achievement time taken by the operator in the past and a proficiency level of the operator at a present point (for example, refer to Patent Document 1).

Specifically, in the invention described in Patent Document 1, the achievement time taken for welding components of various weights of the past operators is corrected to a required time for the operator at the present point by using predetermined proficiency level information. Thereafter, a required time prediction formula is created on the basis of the required time after correction of the components of various weights, and the time needed for the operator to weld components of the given weight at the present point is estimated on the basis of the required time prediction formula.

CITATION LIST

PATENT DOCUMENT

Patent Document 1: Japanese Patent Application Laid-Open No. 2010-86928

SUMMARY OF THE INVENTION

PROBLEMS TO BE SOLVED BY THE INVENTION

However, with the invention described in Patent Document 1, it is difficult to estimate, for example, the time required for tasks other than welding and the required time for operators without data of achievement time in the past.

Accordingly, the present technology aims to facilitate estimation of the difficulty level of a task.

SOLUTIONS TO PROBLEMS

An information processing apparatus according to an aspect of the present technology includes an estimation unit that estimates a task difficulty level being a difficulty level of a task on the basis of information related to the task.

The task may be defined as one or a combination of two or more of the following: labeling, comparison, enumeration, evaluation, search, answering, solution, investigation, organization, transformation, summarization, association, analogy, generation, recommendation, planning, refining, consultation, conversation, transportation, production, designing, and testing.

It is possible to cause the estimation unit to estimate the task difficulty level on the basis of at least one of a feature amount of the task, a feature amount of a sample as a processing target of the task, and a feature amount of an operator who executes the task.

It is possible to cause the estimation unit to estimate the task difficulty levels of tasks of different types on the basis of at least the feature amount of each of the tasks.

The estimation unit can use a first model to estimate the task difficulty level on the basis of at least one of the feature amount of the task, the feature amount of the sample, and the feature amount of the operator.

It is possible to further provide a first learning unit that learns the first model.

It is possible to cause the first learning unit to learn the first model using the feature amount of each of tasks obtained from achievement data of the task difficulty level for each of tasks of each of operators and the feature amount of each of the operators.

It is possible to further provide a feature amount extraction unit that extracts at least one of the feature amount of the task, the feature amount of the sample, and the feature amount of the operator.

The task difficulty level can be used as a difficulty level of the task for a person.

It is possible to represent the task difficulty level on the basis of at least one of an objective criterion of the task and a subjective criterion of the task.

It is possible to further provide a second learning unit that learns a second model by selecting data for learning the second model that executes the task on the basis of the task difficulty level for each of pieces of data.

It is possible to further cause the second learning unit to select the learning data on the basis of a degree of uncertainty of each of the pieces of data for a machine.

It is possible to further provide a presentation control unit that controls to present the task difficulty level together with contents of the task in recruiting an operator who executes the task.

It is possible to cause the presentation control unit to control to present the task difficulty level defined for each of operators individually on an operator-by-operator basis.

It is possible to cause the estimation unit to estimate the task difficulty level for each of problems included in a text and to estimate the difficulty level of the text on the basis of a result of the estimation.

An information processing method according to an aspect of the present technology includes an estimation step of estimating a task difficulty level being a difficulty level of a task on the basis of information related to the task, executed by an information processing apparatus.

A program according to an aspect of the present technology causes a computer to execute processing including an estimation step of estimating a task difficulty level being a difficulty level of a task on the basis of information related to the task.

In an aspect of the present technology, the task difficulty level being the difficulty level of a task is estimated on the basis of information related to the task.

EFFECTS OF THE INVENTION

According to an aspect of the present technology, it is possible to easily estimate the difficulty level of a task.

Note that effects described herein are non-restricting. The effects may be any effects described in the present disclosure.

BRIEF DESCRIPTION OF DRAWINGS

Fig. 1 is a block diagram illustrating an information processing system according to an embodiment of the present technology.

Fig. 2 is a block diagram illustrating a configuration example of a server.

Fig. 3 is a block diagram illustrating a configuration example of functions implemented by a CPU of a server.

Fig. 4 is a diagram illustrating a first specific example of a task.

Fig. 5 is a diagram illustrating a second specific example of a task.

Fig. 6 is a diagram illustrating a third specific example of a task.

Fig. 7 is a diagram illustrating a fourth specific example of a task.

Fig. 8 is a flowchart illustrating difficulty level estimation model learning processing.

Fig. 9 is a diagram illustrating a specific example of a task difficulty level.

Fig. 10 is a flowchart illustrating task difficulty level estimation processing.

Fig. 11 is a diagram illustrating a learning data selection method.

Fig. 12 is a diagram illustrating a method of selecting learning data.

Fig. 13 is a diagram illustrating an example of an operator recruitment screen in crowdsourcing.

Fig. 14 is a diagram illustrating an example of an order placement screen in crowdsourcing according to the present technology.

Fig. 15 is a diagram illustrating an example of an operator recruitment screen in crowdsourcing according to the present technology.

Fig. 16 is a diagram illustrating an example of an operator recruitment screen in crowdsourcing according to the present technology.

Fig. 17 is a diagram illustrating a modification of a task instruction input method on an order placement screen.

Fig. 18 is a diagram illustrating an example of a method of extracting a feature amount used for estimating a difficulty level of mathematical problem.

Fig. 19 is a diagram illustrating an example of a sentence problem.

MODE FOR CARRYING OUT THE INVENTION

Hereinafter, embodiments the present invention (hereinafter, embodiment(s)) will be described in detail with reference to the drawings. Note that description will be presented in the following order.

1. Embodiments
2. Application example
3. Modification, and others

<<1. Embodiment>>

<1-1. Configuration example of information processing system 1>

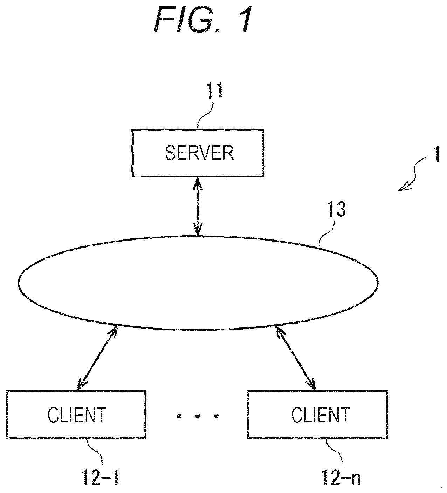

Fig. 1 illustrates an embodiment of an information processing system 1 according to the present technology.

The information processing system 1 includes a server 11 and clients 12-1 to 12-n. The server 11 and the clients 12-1 to 12-n are mutually connected via a network 13 to communicate with each other. The server 11 and the clients 12-1 to 12-n can adopt an arbitrary communication method, regardless of wired or wireless.

The server 11 supplies various services to users using the clients 12-1 to 12-n.

For example, the server 11 supplies a crowdsourcing service. Here, the crowdsourcing service is a service enabling recruitment of operators who execute a task and enabling placement and undertaking of orders using the Internet or the like. For example, an orderer who requests a task uses a crowdsourcing service via the client 12 to place an order for a task or to receive a product being a task execution result. Meanwhile, an operator uses a crowdsourcing service via the client 12 to undertake an order for the task or to transmit a product.

In addition, the server 11 learns a model (hereinafter referred to as a task execution model) for executing various tasks, and generates a task execution model. Furthermore, the server 11 executes various tasks using the task execution model, presents the obtained product, and supplies the product to a user of the clients 12-1 to 12-n.

Examples of the clients 12-1 to 12-n include a smart phone, a tablet, a mobile phone, a portable information terminal such as a notebook type personal computer, a desktop type personal computer, a game machine, a movie player, a music player, and the like. In addition, other examples of the clients 12-1 to 12-n include various wearable devices such as eyeglass type, wristwatch type, bracelet type, necklace type, neckband type, earphone type, headset type, and head mounted type.

The clients 12-1 to 12-n are used to utilize the products of services and tasks supplied by the server 11, for example.

Note that in the following description, the clients 12-1 to 12-n will be simply referred to as the client 12 unless they need to be distinguished from each other.

<1-2. Configuration example of server 11>

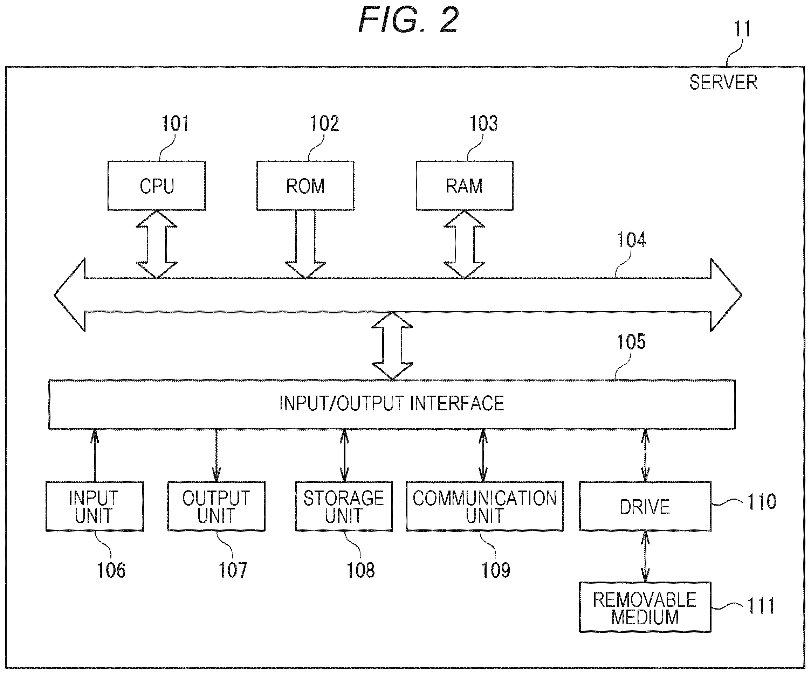

Fig. 2 illustrates a configuration example of the server 11.

In the server 11, a central processing unit (CPU) 101, a read only memory (ROM) 102, and a random access memory (RAM) 103 are interconnected with each other via a bus 104. The bus 104 is further connected with an input/output interface 105. The input/output interface 105 is connected with an input unit 106, an output unit 107, a storage unit 108, a communication unit 109, and a drive 110.

The input unit 106 is constituted with an input device such as a key board, a mouse, and a microphone, for example.

The output unit 107 is constituted with a display, a speaker, or the like, for example.

The storage unit 108 is constituted with a hard disk, a nonvolatile memory, or the like, for example.

The communication unit 109 is constituted with a wired or wireless communication apparatus, a network interface, or the like, for example. The communication unit 109 can use an arbitrary communication method, even a plurality of communication methods.

The drive 110 drives a removable medium 111 including a magnetic disk, an optical disk, a magneto-optical disk, a semiconductor memory, and the like, for example.

On the server 11, a series of processes is executed by operation such that the CPU 101 loads, for example, a program stored in the storage unit 108 onto the RAM 103 via the input/output interface 105 and the bus 104 and executes the program.

The program executed by the server 11 (CPU 101) can be stored, for example, in the removable medium 111 as a package medium or the like and be provided. Alternatively, the program can be provided via a wired or wireless transmission medium including a local area network, the Internet, and digital satellite broadcasting.

In the server 11, the program can be installed in the storage unit 108 via the input/output interface 105, by attaching the removable medium 111 to the drive 110. In addition, the program can be received at the communication unit 109 via a wired or wireless transmission medium and be installed in the storage unit 108. Alternatively, the program can be installed in the ROM 102 or the storage unit 108 beforehand.

Note that in the following, description of the bus 104 and the input/output interface 105 will be omitted in the exchange of information, etc. performed by individual units of the server 11 via the bus 104 and the input/output interface 105. For example, in a case where the communication unit 109 supplies the received data to the CPU 101 via the bus 104 and the input/output interface 105, this operation will be described as the communication unit 109 supplying received data to the CPU 101, without description of the bus 104 or the input/output interface 105.

<1-3. Configuration example of functions of server 11>

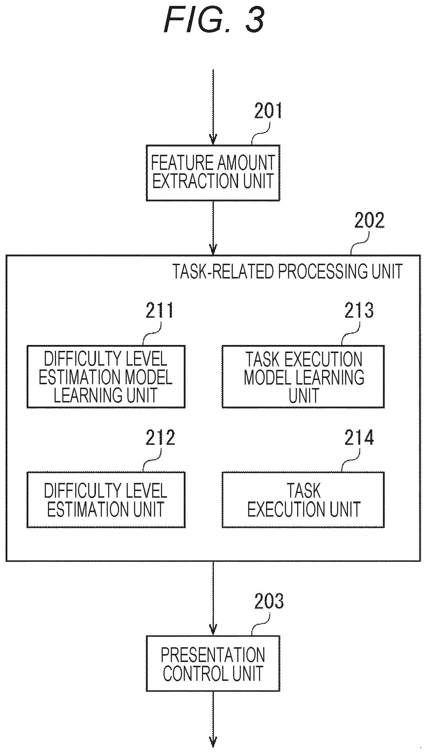

Fig. 3 is a block diagram illustrating a configuration example of functions related to the present technology among functions implemented by the CPU 101 of the server 11. The CPU 101 executes a predetermined control program so as to implement functions including a feature amount extraction unit 201, a task-related processing unit 202, and a presentation control unit 203. Furthermore, the task-related processing unit 202 includes a difficulty level estimation model learning unit 211, a difficulty level estimation unit 212, a task execution model learning unit 213, and a task execution unit 214.

The feature amount extraction unit 201 extracts the feature amount of the given data. For example, the feature amount extraction unit 201 extracts the feature amount of the task, the feature amount of the sample as a processing target of the task, and the feature amount of the operator who executes the task. The feature amount extraction unit 201 supplies data indicating a feature amount extraction result to the task-related processing unit 202 or stores the data in the RAM 103 or the storage unit 108.

The difficulty level estimation model learning unit 211 learns a difficulty level estimation model. Here, the difficulty level estimation model is a model that estimates a task difficulty level indicating how difficult the various tasks are for people, and is a type of task execution model that executes a task of estimating the task difficulty level. The difficulty level estimation model learning unit 211 supplies information related to the difficulty level estimation model obtained as a result of learning to the presentation control unit 203, or stores the information in the RAM 103 or the storage unit 108.

The difficulty level estimation unit 212 estimates a task difficulty level on the basis of information related to a task by using the difficulty level estimation model generated by the difficulty level estimation model learning unit 211. The difficulty level estimation unit 212 supplies the estimation result of the task difficulty level to each of units of the task-related processing unit 202 and the presentation control unit 203, and stores the estimation result in the RAM 103 or the storage unit 108.

The task execution model learning unit 213 learns the task execution model excluding the difficulty level estimation model. The task execution model learning unit 213 supplies information related to the task execution model obtained as a result of learning to the presentation control unit 203, and stores the information in the RAM 103 or the storage unit 108.

The task execution unit 214 executes various tasks by using the task execution model generated by the task execution model learning unit 213. The difficulty level estimation unit 212 supplies the product obtained by executing the task to each of units of the task-related processing unit 202 and the presentation control unit 203, and stores the result in the RAM 103 or the storage unit 108.

The presentation control unit 203 controls presentation of various types of information in the output unit 107 and the client 12. For example, the presentation control unit 203 controls presentation of the product as a task execution result at the output unit 107 and the client 12.

<1-4. Examples of task>

Tasks capable of estimating the task difficulty level using the difficulty level estimation model are not particularly limited as long as the tasks are executable by a person. The following are typical tasks to which the difficulty level estimation model can be applied.

a) Labeling

"Labeling" is a task of attaching a label to a sample under predetermined conditions. The following tasks are examples that correspond to "labeling".
- Attach a "bird" label in a case where the sample is an image of a "bird".
- Label a region of a "bird" in an image.
- Categorize a website.
- Evaluate favorability of a photo in five levels.
- Evaluate an idea of a novel in five levels.
- Prioritize questions or requests from customers.

- Label as to whether or not the sample corresponds to personal information.
- Label a region needing age restriction for browsing in an image.
- Evaluate whether the sample is presented in natural Japanese.

The following are examples of labels attached to sentences.
- Positive or Negative
- Topics (politics, economics, sports, and the like, for example)
- Unique expression
- Word class
- Breaks of morphemes

Note that labeling of unique expression, word classes, and breaks of morphemes is a type of sequence labeling.
For example, the following includes labels attached to images.
- Title
- Caption
- Type of object in an image

b) Comparison

"Comparison" is a task of comparing a plurality of samples, for example. The following tasks correspond to "comparison", for example.
- Determine whether or not two photos are photos of a same person.
- Select the better one of two promotional phrases.
- Select the more relaxing one of two songs.

c) Enumeration

"Enumeration" is a task of enumerating samples satisfying a predetermined condition, for example. The following tasks are examples that correspond to "enumeration".
- Enumerate as many words used to talk to an audio agent in looking up a schedule.
- Enumerate ideas of a gift to wife or husband.
- Enumerate promotional phrases for a certain merchandise.

d) Evaluation

"Evaluation" is a task to evaluate the performance or the like of a task. For example, the following task corresponds to "evaluation".
- Evaluate a matching degree in text transcription from an image.

e) Search

"Search" is a task of searching for samples satisfying the conditions, for example. For example, the following tasks correspond to "search".
- Collect web pages about deep learning.
- Find an electronic commerce (EC) site providing Camera A at the lowest price.
- Make a list of e-mail related start-up (small business) companies.

- Find a service capable of image processing on the web.

f) Answering/solution/investigation

"Answering/solution/investigation" is a task of creating an answer to a question, creating a solution to a problem, and investigating a question or a problem, for example. The following tasks are examples that correspond to "answering/solution/investigation".
- What is deep learning?
- Solve problems related to mathematics, national languages, English, society, science, or the like.
- Give appropriate hints for problems related to mathematics, national languages, English, society, science, or the like.

g) Organize

"Organize" is a task of organizing samples, for example. The following tasks are examples that correspond to "organize".
- Organize images.
- Organize a to-do list.

h) Transformation/summarization

"Transformation/summarization" is a task of transforming or summarizing information, for example. The following tasks are examples that correspond to "transformation/summarization".
- Add a title to an image.
- Convert a character in an image to a text.
- Transcribe a purchased item and its price on a receipt.
- Translating a sentence from Japanese to English.
- Transform Japanese sentence to a simpler Japanese sentence.
- Summarize this book with 400 characters.

i) Association/analogy

"Association/analogy" is a task of providing a sample associated with a given condition, obtaining a relation between a plurality of samples, and analogizing a sample corresponding to a given condition on the basis of another relationship, for example. The following tasks are examples that correspond to "association/analogy".
- What is representative songs of artist A?
- What is the scales for the fish, in birds?
- What is the relationship between fish and pacific saury?

j) Generate

"Generate" is a task of generating samples satisfying a given condition, for example. The following tasks are examples that correspond to "generation".
- Draw an illustration of a bird.
- Politely decline an invitation to a meeting with an e-mail.
- Take a photograph of location A.
- Take a photograph of a bird.
- Record sound at location B.

In addition, regardless of the type of task, there may be a case where consultation on a task is sent from an operator who executes the task to an orderer instructing the task. For example, in a case where the operator judges that information is insufficient for the task of "drawing an illustration of a bird", the operator consults with the orderer to make the contents of the task more specific. This "task for generating a task instruction specifying contents of the task" can also be regarded as a type of task of "generation". The product of this task is the more specific task instruction, for example.

k) Recommendation

"Recommendation" is a task of recommending samples satisfying a given condition, for example. The following tasks are examples that correspond to "recommendation".
- Recommend a good sightseeing spot in Hokkaido.
- Recommend best BGM during work.
- Play the BGM best for a working situation.

1) Planning/refining

"Planning/refining" is a task of planning and refining specific methods for achieving a given purpose, for example. The following task is an example that corresponds to "planning/refining".
- Give ideas and plans for going out to the beach.

m) Consultation/conversation

"Consultation/conversation" is a task of listening to another person's problem, etc. and talking with other people, for example. The following task is an example that corresponds to "consultation/conversation".
- Listen to one's problem.

n) Transport

"Transport" is a task of carrying objects (including living things such as people), for example. The following task is an example that corresponds to "transport".
- Carry a package from location A to location B.

o) Manufacturing/designing

"Manufacturing/designing" is a task of making or designing something, for example. The following tasks are examples that correspond to "manufacturing/designing".
- Assemble the ballpoint pen.
- Design a box that can safely carry this package (fragile good, for example).

p) Test

"Test" is a task of executing a test of a product, a service, or the like, for example. The following tasks are examples that correspond to "test".
- Take a photograph from location A to location Z with this camera.
- Try this service for one month.

q) Others

The above task types are examples, and other tasks are possible as below.
- Give teeth treatment.
- Reserve a meeting room.
- Construct a road.
- Repair a certain product.
- Clean an interior of a building.
- Sell this item.
- Purchase items in the list.

Note that the type of each of tasks is not necessarily clearly categorized, and there are tasks included in a plurality of types and tasks combining a plurality of types.

Next, an example of a task representation method will be described. Examples of task representation methods include single-label representation, multi label representation, microtask representation, natural sentence representation, and the like.

With the single-label representation, a task is represented by one defined label. For example, with the single-label representation, a task of labeling a bird is represented by a single label of "labeling a bird".

The multi-label representation represents a task using a plurality of labels constituting the task. For example, the multi-label representation represents a task of labeling birds using two labels, namely, "labeling" and "bird".

Microtask representation is a task that is divided into microtasks in representation. For example, in the microtask representation, representation DescribeColor (Find (bird's beak)) is used for a task of labeling a color of a bird's beak. Here, DescribeColor () is a microtask that describe a target color, and Find () is a microtask that finds the target.

Natural sentence representation represents a task in a natural sentence. For example, the natural sentence representation uses an expression of "label this in a case where this is a bird" for the task of labeling a bird.

In addition, each representation method can be mutually transformed or combined.

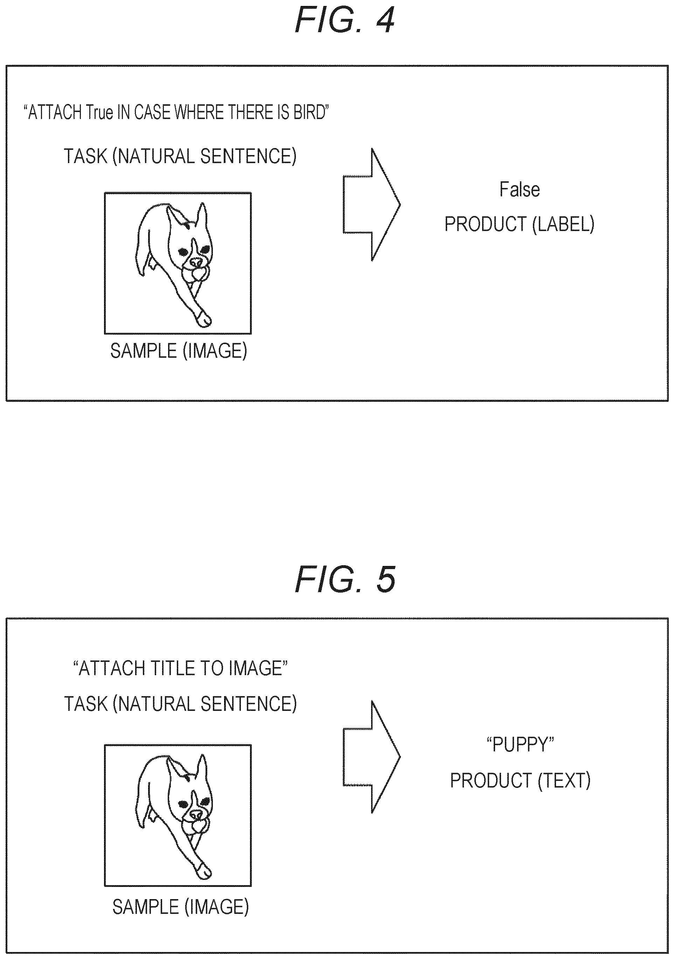

Moreover, some tasks use samples as processing targets while other tasks do not use any samples. For example, a task "attach True in a case where there is a bird" indicated in Fig. 4 is a task using a sample. In this case, the task is given in a natural sentence and an image is given as a sample. Consequently, a label of True or False is obtained as a product.

Furthermore, a task of "attaching a title to the image" indicated in Fig. 5 is also a task using a sample. In this case, the task is given in a natural sentence and an image is given as a sample. Then, a text such as a "puppy" is obtained as a product.

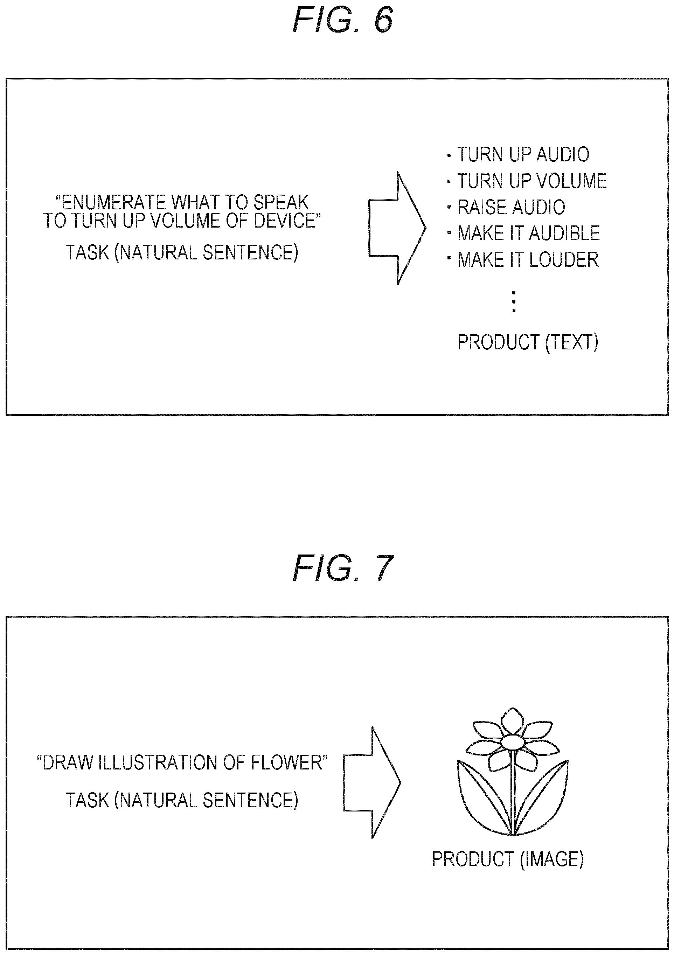

In contrast, a task "enumerate what to speak to turn up the volume of the device" indicated in Fig. 6 is a task not using a sample. In this case, the task is given in a natural sentence and there is no given sample. Then, a text such as "turn up the audio", "turn up the volume", "raise the audio", "make it audible", or "make it louder" would be obtained as a product.

In addition, a task "draw illustration of a flower" indicated in Fig. 7 is also a task not using a sample. In this case, the task is given in a natural sentence and there is no given sample. As a result, an image is obtained as a product.

<1-5. Difficulty level estimation model learning processing>

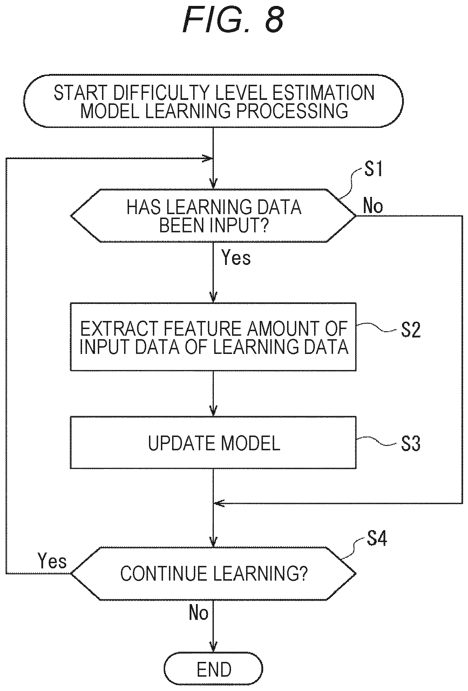

Next, with reference to the flowchart of Fig. 8, the difficulty level estimation model learning processing executed by the server 11 will be described.

As described above, the difficulty level estimation model is a model for estimating the task difficulty level being a task difficulty level for a person. For example, the difficulty level estimation model is represented by a function f1 of the following Formula (1).

$$y = f1\ (x1,\ x2,\ x3)\ \cdots\ (1)$$

Here, x1 is a vector representing a feature amount of a task x1 (hereinafter referred to as a task vector). x2 is a vector representing a feature amount of a sample x2 to be processed by the task x1 (hereinafter referred to as a sample vector). x3 is a vector representing a feature amount of an operator x3 to execute the task x1 (hereinafter referred to as an operator vector). That is, the function f1 is a difficulty level estimation model for estimating the task difficulty level y in a case where the operator x3 executes the task x1 having the sample x2 as a processing target. In addition, with the use of this function f1, it is possible to estimate difficulty levels of different tasks (arbitrary tasks) using a single difficulty level estimation model.

Here, task difficulty level is expressed on the basis of objective criteria or subjective criteria.

For example, objective criteria include the required time for a task, accuracy of a product as a result of task execution, integrity of the product, and the like.

In a case where the required time of a task is used as a criterion, for example, the shorter the average value of required time for each of operators, the lower the task difficulty level becomes; and the longer the average required time, the higher the task difficulty level becomes.

The accuracy of the product is represented, for example, as a correct answer rate of the product in the case of a task having a correct answer. For example, the higher the correct answer rates, the lower the task difficulty level becomes, and the lower the correct answer rates, the higher the task difficulty level becomes.

In a case where the integrity of a product is used as a criterion, for example, the higher the average value of integrity of a product for each of operators, the lower the task difficulty level becomes; and the lower the average integrity of a product for each of operators, the higher the task difficulty level becomes. Alternatively, for example, the smaller the variation in the integrity of a product among the operators, the lower the task difficulty level becomes; and the greater the variation in the integrity of a product among the operators, the higher the task difficulty level becomes.

Examples of subjective criteria include an operator's certainty level of the task, impression of the task from the operator, and the like.

The operator's certainty level toward the task is expressed, for example, by the operator's confidence in the product of the task. For example, the higher the percentage of operators with confidence in the products, the lower the task difficulty level becomes; the smaller the percentage of operators with confidence in the products, the higher the task difficulty level becomes

Furthermore, for example, in a case where a task can be regarded as a question and the sample is limited to an image, for example, it is possible to use certainty level of answers obtained by Visual Question Answering (VQA) as the task difficulty level.

Furthermore, in a case where impression on the task given to the operator is used as a criterion, for example, the smaller the percentage of operators who feel difficult, the lower the task difficulty level becomes; the higher the percentage of operators who feel difficult, the higher the task difficulty level becomes.

Note that the task difficulty level may be expressed using a plurality of criteria. In a case where a plurality of criteria is used, task difficulty level may be expressed using objective criteria alone or subjective criteria alone. Alternatively, it is allowable to express task difficulty level using objective criteria in combination with the subjective criteria.

In addition, as indicated in Formula (1) above, the task difficulty level is influenced by tasks, samples, and operators.

For example, the task difficulty level is influenced by the difficulty level of the task itself, and the integrity and criteria of the required task. For example, when comparing a task of labeling whether or not there is a bird in an image with a task of labeling a type of bird in the image, the task difficulty level is lower in the former case, while the task difficulty level is higher in the latter case. In addition, in another case of a task of drawing a picture of a bird, for example, the lower the integrity of the required picture, the lower the task difficulty level becomes, that is, the higher the integrity of the required picture, the higher the task difficulty level becomes.

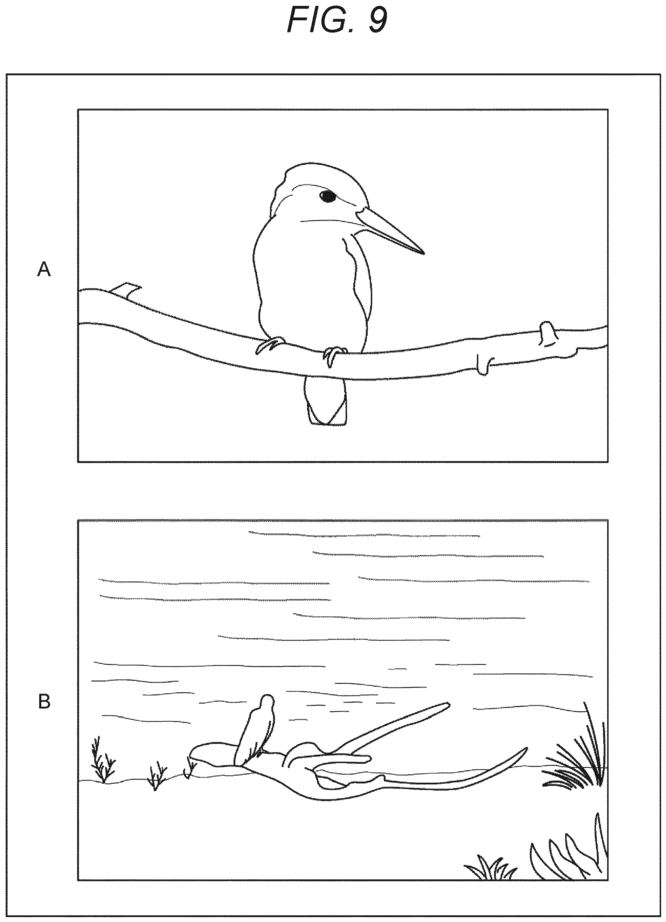

Moreover, for example, the task difficulty level is influenced by samples as processing targets of a task. For example, given the image in A of Fig. 9 and the image in B of Fig. 9 as samples for the task of labeling whether or not there is a bird in the image, the task difficulty level for the image in A of Fig. 9 is lower than the task difficulty level for the image in B of Fig. 9.

Furthermore, the task difficulty level is influenced by operator's ability, knowledge, experience, or the like, for example. For example, the task difficulty level for the tasks requiring motor nerves and reflexes is greatly influenced by operators' motor nerves and reflexes. Moreover, for example, the task of attaching a label representing the type of bird in the image would be easy for an operator with knowledge of birds leading to low task difficulty level, while the task difficulty level would be high for operators having less knowledge of birds.

Note that it is not always necessary to use all of the task vector, the sample vector, and the operator vector as input data of the difficulty level estimation model, and there is a case where one or two vectors alone are used as necessary. The following Formulas (2) to (7) illustrate an example of a difficulty level estimation model using one or two of a task vector, a sample vector, and an operator vector as input data.

$$y = f2\ (x1)\quad \cdots\ (2)$$

A function f2 is a difficulty level estimation model having the input data as a task vector alone. For example, the function f2 is used to estimate the task difficulty level of an arbitrary type of task that does not use samples such as "draw illustration" and "listen to one's worry" without considering a difference of operators. Alternatively, for example, the function f2 is used in estimating the task difficulty level of any task of a type using a sample such as "attach a title to sample x2" without considering a difference in samples and operators.

$$y = f3 \ (x2) \ \cdots \ (3)$$

A function f3 is a difficulty level estimation model in which the target task is predetermined (the task is fixed) and the input data is a sample vector alone. The function f3 is used, for example, to estimate the task difficulty level of each of samples of a predetermined task of a type using a sample without considering a difference of operators.

$$y = f4 \ (x3) \ \cdots \ (4)$$

A function f4 is a difficulty level estimation model in which a task is fixed and input data is the operator vector alone. The function f4 is used, for example, in estimating the task difficulty level for each of operators of a predetermined task type not using a sample. Alternatively, the function f4 is used, for example, in estimating the task difficulty level for each of operators of a predetermined task of a type using a sample without considering a difference in samples.

$$y = f5 \ (x1, \ x2) \ \cdots \ (5)$$

A function f5 is a difficulty level estimation model in which the input data is a task vector and a sample vector. For example, the function f5 is used to estimate the task difficulty level for each of samples of an arbitrary type of sample using a sample without considering differences of operators.

$$y = f6 \ (x1, \ x3) \ \cdots \ (6)$$

A function f6 is a difficulty level estimation model in which the input data is a task vector and an operator vector. For example, the function f6 is used in estimating the task difficulty level for each of operators of an arbitrary task type without using a sample. Alternatively, the function f6 is used, for example, in estimating the task difficulty level for each of operators of an arbitrary task of a type using a sample without considering a difference in samples.

$$y = f7 \ (x2, \ x3) \ \cdots \ (7)$$

A function f7 is a difficulty level estimation model in which tasks are fixed and the input data is a sample vector and an operator vector. The function f7 is used, for example, for estimating the task difficulty level for each of samples of a predetermined task of a type using a sample and for each of operators.

Note that in the following, the functions f1 to f7 will be simply referred to as the function f in a case where it is not necessary to distinguish between them.

Returning to the explanation of Fig. 8, the feature amount extraction unit 201 determines in step S1 whether or not learning data has been input. In a case where it is determined that the learning data has been input, the processing proceeds to step S2.

Here, the learning data is data for learning the difficulty level estimation model and includes input data and correct answer data indicating a task difficulty level with respect to the input data. For example, the input data includes at least one of a task, a sample, and an operator (data representing the operator). Note that the type of data included in the input data varies depending on which difficulty level estimation model of the above functions f1 to f7 is to be generated.

In step S2, the feature amount extraction unit 201 extracts the feature amount of the input data of the learning data.

More specifically, in a case where a task is included in the input data, the feature amount extraction unit 201 extracts the feature amount of the task using the following method, for example.

In a case where the task is represented by text data, the feature amount of the task is extracted by a method such as Bag-of-Words (BoWs), N-gram, and a recurrent neural network (RNN), for example.

In addition, in a case where tasks are represented by labels, that is, in a case where the target is represented by a label such as "bird" in a task of selecting merely a sample satisfying the condition, for example, the corresponding label is to be used as it is as a feature amount. In this case, for example, the feature amount is represented by 1-hot encoding. Alternatively, for example, the feature amount of the task is transformed into a feature amount using an embedded expression (expression that is embedded). In this case, for example, the feature amount is represented by an expression obtained by transforming a category variable into an n-dimensional real variable.

Moreover, for example, in a case where the task is represented by a natural sentence, it is allowable to use, as the task feature amount, a required time estimation value of the task obtained by regression analysis with the task as input data and the required time per sample as the correct solution.

Thereafter, the feature amount extraction unit 201 generates a task vector obtained by vectorizing the feature amount of the task.

Furthermore, in a case where samples are included in the input data, the feature amount extraction unit 201 extracts feature amounts of samples using the following method, for example.

In a case where text data is included in the sample, the feature amount of text data is extracted using a method such as BoWs, N-gram, and NN (especially RNN), for example.

In the case where image data is included in the sample, for example, feature amounts using NN (convolutional Neural Network (CNN), in particular) and feature amount such as histograms of oriented gradients (HOG), scale-invariant feature transform (SIFT), speeded up robust features (SURF), and Haar-Like are extracted from the image data.

In the case where the sample includes audio data, for example, feature amounts such as NN (in particular, MLP (Multi-Layer Perceptron) or CNN) and feature amounts such as Mel frequency cepstrum coefficients are extracted from the audio data.

In the case of extracting a feature amount by tactile sense from a sample, for example, a parameter indicating a surface roughness is extracted as a feature amount.

In the case of extracting a feature amount by taste from a sample, for example, the concentration of a component related to the taste is extracted as a feature amount.

In the case of extracting a feature amount by olfaction from a sample, for example, the concentration of a component related to odor is extracted as a feature amount.

Thereafter, the feature amount extraction unit 201 generates a sample vector obtained by vectorizing the feature amount of the sample.

Moreover, in a case where the operator is included in the learning data, the feature amount extraction unit 201 extracts the feature amount of the operator. For example, the feature amount extraction unit 201 extracts a feature amount of the operator from input data related to the operator and data (for example, a profile etc.) related to the operator registered beforehand.

Then, the feature amount extraction unit 201 generates an operator vector obtained by vectorizing the feature amount of the operator.

The feature amount extraction unit 201 supplies the learning data containing each of generated feature amount vectors to the difficulty level estimation model learning unit 211.

In step S3, the difficulty level estimation model learning unit 211 updates the model. For example, the difficulty level estimation model learning unit 211 performs machine learning with a predetermined scheme using obtained learning data and thereby updates the difficulty level estimation model.

For example, in a case where a difficulty level estimation model of a fixed task of "enumerating the names of objects appearing in the image" is to be learned, a regression analysis with the image (sample) defined as input data and using learning data that sets a required time per image as correct answer data.

Moreover, for example, in a case where a difficulty level estimation model of an arbitrary task represented by a natural sentence is to be learned, a regression analysis at least containing a task, is performed using, as necessary, a sample, input data including an operator, and learning data containing correct answer data represented by required time for the task.

The difficulty level estimation model learning unit 211 controls to store information related to the updated difficulty level estimation model into the storage unit 108.

Thereafter, the processing proceeds to step S4.

In contrast, in a case where it is determined in step S1 that no learning data has been input, the processing in step S2 and step S3 is skipped and the processing proceeds to step S4.

In step S4, the difficulty level estimation model learning unit 211 determines whether or not to continue learning. In a case where it is determined that the learning is to be continued, the processing returns to step S1.

Thereafter, the processing of steps S1 to S4 are repeatedly executed to perform learning of the difficulty level estimation model until it is determined in step S4 to finish learning.

In contrast, in step S4, the difficulty level estimation model learning unit 211 determines to finish the learning in a case where the conditions for finishing the learning of the difficulty level estimation model are satisfied, and then, the difficulty level estimation model learning processing is finished.

For example, one or more of the following conditions are set as the conditions for finishing learning of the difficulty level estimation model.

- When a predetermined learning period has elapsed
- When the amount of learning data learned exceeds a predetermined threshold
- When the estimation accuracy of the difficulty level estimation model with the use of learning data of the past exceeds a predetermined threshold
- When the change amount of the internal parameter of the difficulty level estimation model falls below a predetermined threshold

Note that, in learning of the difficulty level estimation model, it is possible, for example, to obtain a task vector of each of tasks and an operator vector of each of operators on the basis of the achievement data of the task difficulty level for each of tasks for each of operators, and possible to use the result as learning data.

Specifically, the left side of the following expression (8) represents an achievement value of the task difficulty level (for example, the required time for a task) for each of tasks for each of operators by a matrix. For example, $r_{nm}$ indicates a task difficulty level for a task m of an operator n. Furthermore, N indicates the total number of operators, and M indicates the total number of tasks. Note that the achievement values of the task difficulty levels for all combinations of operators and tasks are not necessarily required.

[Mathematical Expression 1]

$$
\begin{pmatrix}
r_{11} & r_{12} & r_{13} & \cdots & r_{1M} \\
r_{21} & r_{22} & r_{23} & \cdots & r_{2M} \\
& & \vdots & & \\
& & \vdots & & \\
r_{N1} & r_{N2} & r_{N3} & \cdots & r_{NM}
\end{pmatrix}
\approx
\begin{pmatrix}
u_1^T \\
u_2^T \\
u_3^T \\
\vdots \\
u_N^T
\end{pmatrix}
\times
\begin{pmatrix} v_1 & v_2 & v_3 & \cdots & v_M \end{pmatrix}
\quad \cdots (8)
$$

$$
r_{nm} \approx u_n^T v_m = \sum_{k=1}^{K} u_{nk} v_{mk} \quad \cdots (9)
$$

Here, for example, the difficulty level estimation model learning unit 211 uses matrix decomposition to decompose the matrix on the left side of the Formula (8) into a latent vector group of the operators and a latent vector group of the tasks as indicated on the right side.

The latent vector group of the operators includes latent vectors $u_1$ to $u_N$ of each of operators, while the latent vector group of the tasks includes latent vectors $v_1$ to $v_N$ of each of tasks. The latent vector $u_n$ includes k elements from $u_{n1}$ to $u_{nk}$, while the latent vector $v_m$ includes k elements from $v_{n1}$ to $v_{nk}$. Then, the task difficulty level $r_{nm}$ for the task m for the operator n is approximated by the inner product of the latent vector $u_n$ and the latent vector $v_m$ as indicated in Formula (9).

Note that it is possible to use Probabilistic Matrix Factorization (PMF) or the like as the matrix decomposition algorithm, for example.

In addition, it is possible to use the latent vector $v_m$ as the task vector of the learning data of the difficulty level estimation model and use the latent vector $u_n$ as the operator vector.

In this manner, it is possible to obtain the task vector and the operator vector for the learning data of the difficulty level estimation model on the basis of the achievement data of the task difficulty level without the need for manually designing the feature amount.

<1-6. Task difficulty level estimation processing>

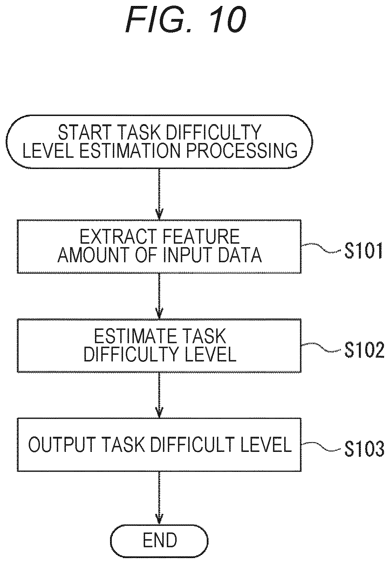

Next, with reference to the flowchart of Fig. 10, the task difficulty level estimation processing executed by the server 11 will be described. Note that this processing is started at completion of input of input data as a task difficulty level estimation target to the server 11, for example. The input data includes one or more of tasks, samples, and operators (that is, data representing these items).

In step S101, the feature amount extraction unit 201 extracts a feature amount of input data similarly to the processing of step S2 in Fig. 8. Then, the feature amount extraction unit 201 supplies a feature amount vector including the extracted feature amount to the difficulty level estimation unit 212. This feature amount vector includes at least one of a task vector, a sample vector, and an operator vector.

In step S102, the difficulty level estimation unit 212 estimates the task difficulty level. Specifically, the difficulty level estimation unit 212 applies the feature amount vector supplied from the feature amount extraction unit 201 to the difficulty level estimation model stored in the storage unit 108 to estimate the task difficulty level. For example, the difficulty level estimation unit 212 supplies an estimation result of the task difficulty level to the presentation control unit 203, or stores the estimation result in the RAM 103 or the storage unit 108.

In step S103, the server 11 outputs the task difficulty level. For example, the presentation control unit 203 supplies the estimation result of the task difficulty level to the output unit 107, and displays this result on the display of the output unit 107. Furthermore, for example, the presentation control unit 203 transmits the estimation result of the task difficulty level to the client 12 via the communication unit 109 and the network 13, and controls to present the estimation result of the task difficulty level on the client 12.

Thereafter, the task difficulty level estimation processing is finished.

As described above, it is possible to enhance the versatility of the task difficulty level estimation method and easily estimate the difficulty level of various tasks.

For example, it is possible to easily estimate task difficulty levels for unknown tasks, unknown samples, or unknown operators with no past achievement. Specifically, for example, it is possible to easily estimate the task difficulty level for an arbitrary task without being limited to a specific task as described in Patent Document 1 described above. Furthermore, for example, it is possible to estimate the task difficulty level for operators who have not past achievement of tasks.

In addition, it is possible to estimate the task difficulty level with no consideration of samples or operators, and to estimate a task difficulty level for each of samples or each of operators.

Furthermore, with the use of active learning or the like to be described below, it is also possible to enhance the learning accuracy of the difficulty level estimation model, leading to enhancement of the estimation accuracy of the task difficulty level.

<<2. Application example>>

Hereinafter, application examples of the present technology will be described.

<2-1. Example of application to active learning>

For example, the task difficulty level can be applied to active learning.

In machine learning, much labor and time is needed for preparation of learning data, especially preparation of correct answer data of learning data (for example, labeling or the like). Accordingly, this promotes studies on active learning that selects and uses learning data with high learning efficiency and that thereby generates highly accurate models with less learning data.

Here, the learning data with high learning efficiency corresponds to data capable of greatly improving the integrity of the model, for example. For example, according to "A. Burr," Active learning literature survey, "Technical Report 2010-09-14, University Wisconsin Madison, Computer Sciences Technical Report, 2010." etc., criteria for selecting samples to be used for learning data include the following.

- Uncertainly Sampling: Select the most uncertain sample (for a machine).
- Query-By-Committee: Select a sample with a vote split in a majority vote.
- Expected Model Change: Select a sample with the largest change expected in a model.
- Expected Error Reduction: Select a sample that is likely to reduce the error most.
- Density-Weighted Methods: Prioritize a sample of a portion with high density in a feature amount space.

- Balance exploration and exploitation: Balance exploitation and exploration with the use of model being learned (solve as a multi-armed bandit problem).

With creation of learning data with samples selected in accordance with the above conditions, it is possible to reduce the cost of preparing learning data and improve the learning efficiency.

Here, note that, for example, in machine learning, a sample uncertain for a machine such as a computer is not necessarily a sample uncertain for a person. For example, a sample with a high difficulty level in labeling for a machine is not necessarily a sample with a high difficulty level in labeling for a person. In other words, some samples uncertain for a machine include, for example, truly uncertain samples (for example, samples having difficulty in labeling even for a person) and actually certain samples (for example, samples that can be certainly labeled for a person).

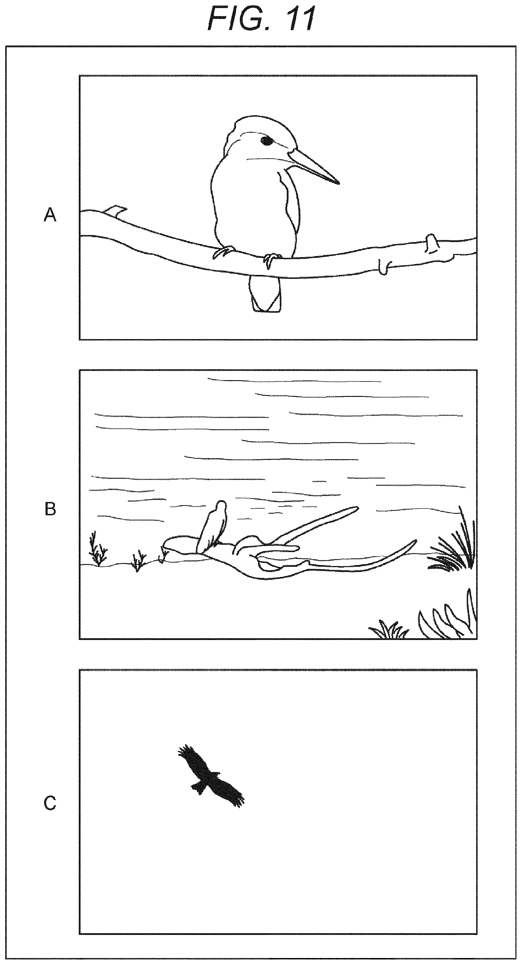

For example, in execution of a task of "attaching a label indicating whether or not a bird appears in the image" to a sample (image) in A of Fig. 11 to C of Fig. 11, the degree of uncertainty for a machine is low for the sample in A of Fig. 11, while the degree of uncertainty for a machine is substantially equally high for the samples in B of Fig. 11 and C of Fig. 11. That is, for a machine, the difficulty level of labeling for the sample in A of Fig. 11 is low, while the difficulty levels of labeling for the sample in B of Fig. 11 and C of Fig. 11 are substantially equally high. Accordingly, the learning effect in the case of using the sample in B of Fig. 11 or C in Fig. 11 would be higher than the learning effect in the case of using the sample in A of Fig. 11.

In contrast, for a person, the degrees of uncertainty for the samples in A of Fig. 11 and C of Fig. 11 are substantially equally low, while the degree of uncertainty for the sample in B of Fig. 11 is high. That is, for a person, the difficulty levels of labeling the sample in A of Fig. 11 and C of Fig. 11 are substantially equally low, while the difficulty level of labeling the sample in B of Fig. 11 is high.

Consequently, in selecting one sample to be used for learning from among the samples of A of Fig. 11 to C in Fig. 11, it would be possible, with the selection of the sample in C of Fig. 11, to enhance learning effects while suppressing the cost needed for creating (labeling) learning data.

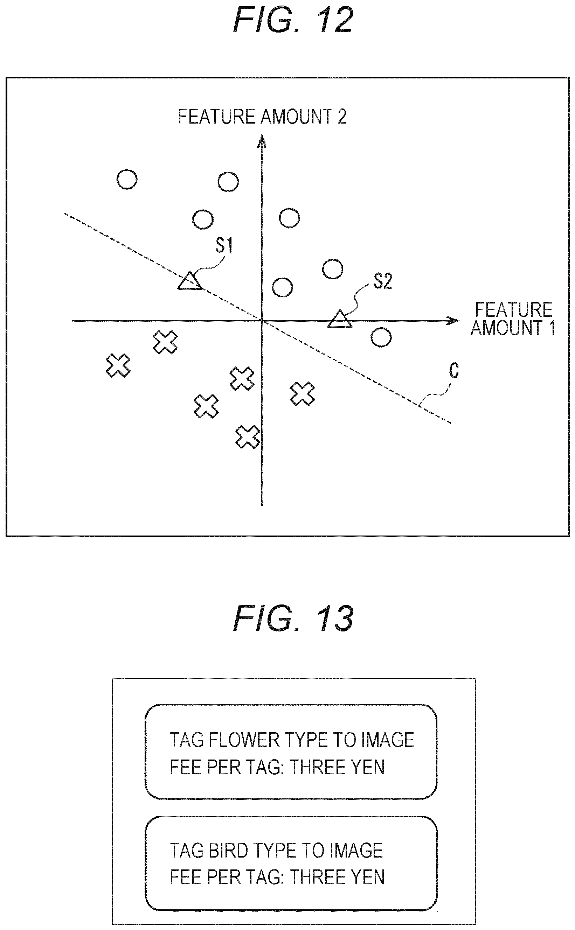

Furthermore, Fig. 12 illustrates an example of a feature amount space in the case of labeling a sample on the basis of the feature amount 1 and the feature amount 2. Points indicated by circles in the figure represent samples labeled as a first class by a person. Points indicated by crosses represent samples labeled as a second class by a person. Point represented by triangles represents samples not yet labeled by a person. In addition, a dotted line c represents a decision plane for classifying samples obtained by the learning processing so far.

Here, a description will be given on a case of selecting a sample to be used for the next learning data from among the samples s1 and s2 represented by triangles in the drawing. Note that in the following, $f(s)$ is defined as a function for estimating the degree of uncertainty (that is, the task difficulty level) for a person in labeling the sample s, and $g(s)$ is defined as a function for estimating the degree of certainty (hereinafter referred to as the certainty level) for a machine in classifying the sample s. The higher the task difficulty level for the sample s, the greater the value of the function $f(s)$; the lower the task difficulty level for the sample s, the smaller the value of the function $f(s)$. The higher the certainty level for the sample s, the greater the value of the function $g(s)$; the lower the certainty level for the sample s, the smaller the value of the function $g(s)$.

In addition, it is assumed to set: $f(s1) = 0.8$ and $g(s1) = 0.5$, and $f(s2) = 0.1$ and $g(s1) = 0.7$. That is, the sample s1 has higher task difficulty level and has lower certainty level, compared with the sample s2.

In a case where the task difficulty level is not used, for example, the sample s1 closer to a decision curve c and having a lower certainty level, that is, not likely to belong to any class, is going to be used as the learning data in preference to the sample s2.

In contrast, in a case where task difficulty level is used, the value of $f(s) + g(s)$ is 1.3 in the sample s1 and 0.8 in the sample s2. Accordingly, the sample s2 having a smaller $f(s) + g(s)$ value is going to be used as the learning data in preference to the sample s1.

In this manner, a sample having a smaller $f(s) + g(s)$ value, that is, a sample having a lower difficulty level for a person and a lower certainty level for a machine, is going to be used preferentially as the learning data. For example, an actually certain sample is used for learning data in preference to a truly uncertain sample. This configuration makes it possible to enhance the learning effect while suppressing the cost needed for creating (labeling) learning data.

Therefore, for example, the difficulty level estimation model learning unit 211 learns the difficulty level estimation model for the task using the above-described method before learning the task execution model that executes a certain task. Next, the difficulty level estimation unit 212 estimates the task difficulty level for the sample as a candidate to be used for learning data, by using the obtained difficulty level estimation model. Then, for example, the task execution model learning unit 213 adds a criterion in selecting a sample having a low task difficulty level (difficulty level for people) as the criteria in selecting a sample to be used for learning data, in addition to the above-described criterion.

With this criterion, in a case where there are samples having a substantially equal degree of learning effect based on another criterion, for example, the task execution model learning unit 213 uses, as learning data, a sample with lower task difficulty level and with which it is easier to create correct answer data in preference to the other sample.

Note that as a criterion in selecting a sample for learning data other than the task difficulty level, it is not always necessary to use all the criteria described above. It is desirable, however, to use at least the criterion for selection of the most uncertain sample (for the machine).

In addition, the input data used for the learning data is not always limited to the sample, that is, the input data may include a task as well as a sample, for example. In contrast, for example, with the preferential use of a task having a higher difficulty level for a machine but having a lower difficulty level for a person as learning data, it is possible to enhance the learning effect while suppressing the cost needed for creating the learning data.

In this manner, with the preferential selection of learning data having a high difficulty level for the machine and a low difficulty level (task difficulty level) for the person, it is possible to enhance the learning effect while reducing the cost needed for creating the learning data.

<2-2. Application example to crowdsourcing>

Moreover, the task difficulty level can also be applied to crowdsourcing, for example.

In crowdsourcing, it is often difficult for an operator to predict the task difficulty level beforehand, and it is therefore difficult to judge whether or not the presented fee is suitable.

For example, Fig. 13 illustrates an example of a recruitment screen displayed on the client 12 of each of operators as a task contents presentation target at the time of recruiting operators in a conventional crowdsourcing. In this example, fee of three yen per tag is presented for each of a task "tag flower type to image" and a task "tag bird type to image". However, since it is hard for an operator to predict a difficulty level of the task of tagging a flower type and a bird type in an image, it is difficult to judge whether or not the presented fee is suitable.

These circumstances often lead to a problem of driving operators to overwork with low fee in crowdsourcing.

To cope with this problem, with a method of automatically calculating and presenting task difficulty levels for individual tasks using the above-described technology, it is possible to achieve a system in which the orderer places an order for a task with a suitable fee and the operator receives an order for the task with a suitable fee.

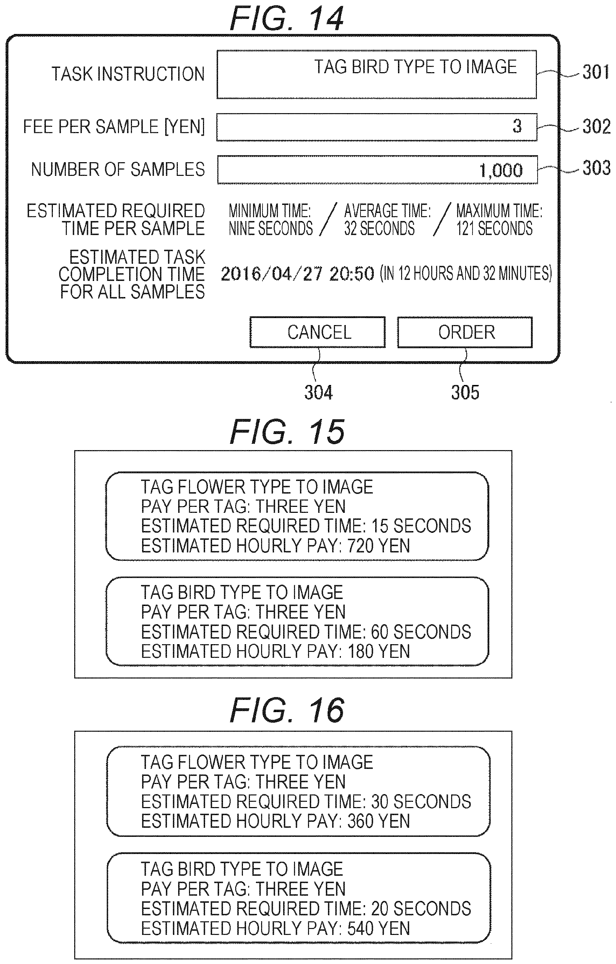

Now, with reference to Fig. 14 to Fig. 16, an example of a flow from order placement to order reception for a task with the use of the task difficulty level will be described.

Fig. 14 illustrates an example of an order placement screen displayed on the client 12 of the orderer under the control of the presentation control unit 203 of the server 11.

On this order placement screen, the orderer can enter a task instruction specifying the contents of the task to be ordered, a fee for the task per sample, and the number of samples as a processing target, into an input field 301 to an input field 303. Subsequently, after the orderer inputs the task instruction, the fee per sample, and the number of samples into the input field 301 and the input field 303, the input data is transmitted to the server 11 via the network 13. At this time, the orderer transmits a sample as a task processing target from its own client 12 to the server 11 via the network 13, as necessary.

The server 11 estimates the task difficulty level of the task input by the orderer by using the processing described above with reference to Fig. 10. For example, the difficulty level estimation unit 212 of the server 11 uses the function f6 of Formula (6) described above to estimate the required time for the task per sample for each of operators registered for a crowdsourcing service, as a task difficulty level. Furthermore, on the basis of a result of estimation, the difficulty level estimation unit 212 calculates a minimum value (shortest time), a maximum value (longest time), and an average value (average time) of the estimated necessary time per sample for all operators.

Moreover, for example, the difficulty level estimation unit 212 estimates the task completion time for all the samples. For example, the difficulty level estimation unit 212 estimates the required time for executing the tasks of all the samples on the basis of the average value of the estimated required time per sample and the number of samples, and estimate completion time of task of all the samples on the basis of the estimation result.

Note that the difficulty level estimation unit 212 may perform, at this time, estimation that substantially how many operators would receive the order and perform operation on the basis of the fee per sample, the order status of other tasks, the activity status of the operator, or the like, and may then take this estimation result into consideration to further estimate the required time for the task and completion time of the task of all the samples. For example, in a time zone during which many operators are active, the number of operators to receive orders of tasks and execute the tasks is expected to increase, leading to early arrival of the task completion estimation time. Furthermore, for example, in a time zone during which there are other orders of similar tasks, the number of operators to undertake orders of tasks and execute the tasks is expected to decrease, leading to delayed arrival of the estimated task completion time.

Then, the server 11 transmits the calculation result of the minimum value, the maximum value and the average value of the estimated necessary time per sample, and the estimated necessary time and estimated completion time of the tasks of all the samples to the client 12 of the orderer.

With this operation, as illustrated in Fig. 14, the minimum value (shortest time), the average value (average time), and the maximum value (longest time) of the estimated necessary time per sample are displayed on the order placement screen. In addition, the estimated task completion time of all samples and the estimated necessary time for tasks for all samples are displayed on the order placement screen. With this configuration, the orderer can easily judge whether or not the task is going to be completed by a desired deadline.

Then, the orderer presses the order button 305 to place an order for the task, so as to start recruitment of the operator who executes the task. Alternatively, the orderer can press a cancel button 304 to cancel the order of the task.

Figs. 15 and 16 are examples of recruitment screens displayed on the client 12 of each of operators under the control of the presentation control unit 203 of the server 11 after order placement for the task. Fig. 15 illustrates an example of a recruitment screen displayed on the client 12 of an operator A. Fig. 16 illustrates an example of a recruitment screen displayed on the client 12 of an operator B.

In this example, the contents of the task and fee are presented information common to all operators, similarly to the recruitment screen in Fig. 13 described above. For example, the recruitment screen of each of the operator A and the operator B each indicates that three yen per tag as the fee for the task of "tagging flower type to an image" and that three yen per tag as the fee for the task of "tagging bird type to an image".

Meanwhile, the estimated necessary time and the estimated hourly fee are different for each of operators. That is, the estimated necessary time estimated as the task difficulty level of each of operators in the server 11 is presented individually on the recruitment screen of each of operators. For example, the recruitment screen of operator A displays the estimated necessary time for a task "tag flower type on image" is 15 seconds, and the estimated necessary time for a task "tag bird type to image" is 60 seconds. Further, on the recruitment screen of operator B, it is presented that the estimated necessary time for a task "tag flower type on image" is 30 seconds, and the estimated necessary time for a task "tag bird type to image" is 20 seconds.

In addition, the estimated hourly fee calculated on the basis of the estimated necessary time and the fee per tag on the server 11 are individually displayed on the recruitment screen of each of operators. For example, the recruitment screen of operator A displays the estimated hourly fee for the task "tag flower type on image" is 720 yen, and the estimated hourly fee for the task "tag bird type to image" is 180 yen. Moreover, the recruitment screen of operator B displays the estimated hourly fee for the task "tag flower type on image" is 360 yen, and the estimated hourly fee for the task "tag bird type to image" is 540 yen.

In this manner, the estimated necessary time (task difficulty level) and the estimated hourly fee are presented according to the performance, skills, and the like of each of operators, enabling each of the operators to find a task suitable for oneself or to judge whether the fee for the task is suitable.

Then, each of operators browses the recruitment screen and applies for a task found as a desired task.

Thereafter, the establishment process of undertaking orders of tasks can be set in flexible manners. For example, the orderer may select an operator to whom the order is to be assigned from among the operators as applicants, or may determine an undertaker of the task in order of arrival.

Then, the operator determined as the undertaker executes the task and transmits a product of the task from one's own client 12 to the server 11 via the network 13. The server 11 transmits the received product to the client 12 of the orderer via the network 13, and the orderer performs inspection of the product.

Note that while the above explanation is an example of estimating and presenting the necessary time for a task, completion time of the task, or the like, without considering the sample as an actual processing target of the task, it is also allowable to perform estimation and presentation in consideration of the sample.

Furthermore, it is also allowable, for example, on the order placement screen of Fig. 14, to enable the orderer to select a specific operator and present estimated necessary time per sample or estimated task completion time of the selected operator. This enables the orderer to select an appropriate operator on the basis of objective data.

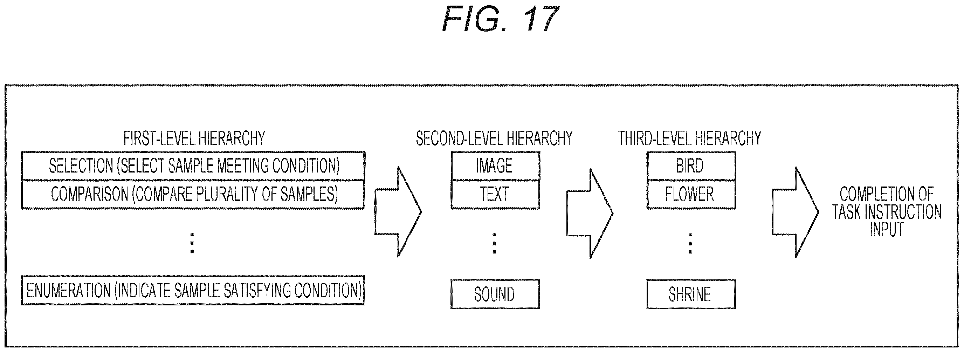

Furthermore, the task may be represented by using a single-label representation or a multi-label representation, and a task instruction may be generated by hierarchical selection of options on the order placement screen as illustrated in Fig. 17. For example, in the example of Fig. 17, it is possible to select a task type such as "selection", "comparison", and "enumeration" in a first-level hierarchy. In a second-level hierarchy, it is possible to select a sample type such as "image", "text", and "sound". In a third-level hierarchy, it is possible to select specific sample items such as "bird", "flower", and "shrine".

For example, selection of "selection" in the first-level hierarchy, "image" in the second-level hierarchy, and "flower" in the third-level hierarchy generates a task instruction of "selection" of an "image" of a "flower".

Note that, for example, it is also possible to allow input of natural sentences in the third-level hierarchy of Fig. 17 and thereby combine single-label representation or multi-label representation with natural sentence representation.

<2-3. Estimation of difficulty level of text>

Furthermore, for example, the difficulty level estimation unit 212 can estimate the difficulty level of a problem by estimating a task difficulty level of a task "solving a problem" using a difficulty level estimation model. Accordingly, it is possible to objectively express the difficulty level of texts in a textbook, a problem collection, a reference book, and the like on the basis of a estimation result of the difficulty level of each of problems. For example, it is possible to objectively express the difficulty level of text on the basis of the average, maximum, total, etc. of the difficulty levels of the problems contained in the text. Note that the target text includes not merely texts on a paper medium but also texts in the form of electronic data such as on-line problem collections.

Here, an exemplary method of extracting a feature amount used for estimating the difficulty level of a problem (task difficulty level) will be described.

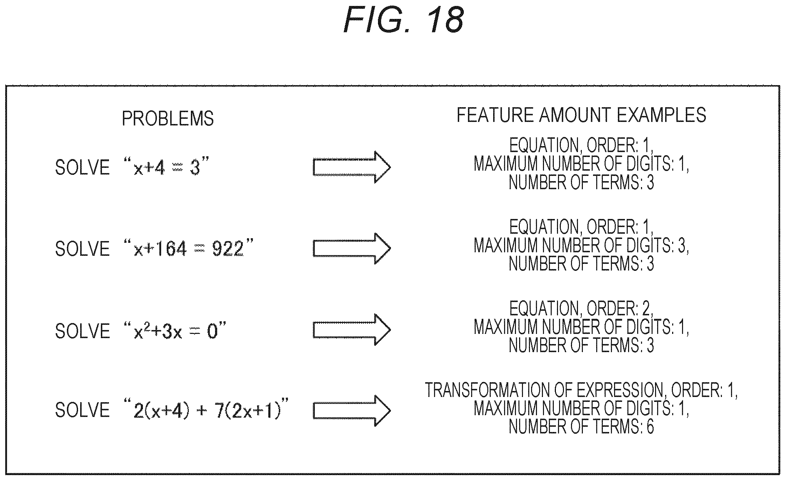

Fig. 18 illustrates an example of a feature amount extraction method used for estimating the difficulty level of a mathematical problem. In this example, the type, order, maximum digit number, and number of terms of the problem are extracted as feature amounts. Among these feature amounts, the problem type is the feature amount of a task "solving a mathematical problem", while the order, the maximum number of digits, and the number of terms are the feature amount of the samples as a target of the task "solving a mathematical problem".

The type of problem is a feature amount indicating the type of problem such as equations, transformation of expressions, and calculation.

The order is a feature amount indicating the order of a mathematical expression included in the problem.

The maximum number of digits is a feature amount indicating the largest digit of individual digits in the mathematical expression included in the problem.

The number of terms is a feature amount indicating the number of terms in a mathematical expression included in the problem.

For example, the task difficulty level of each of problems is estimated by applying task vector including the type of problem and a sample vector including order, maximum number of digits, and number of terms to the function f5 of the above Formula (5).

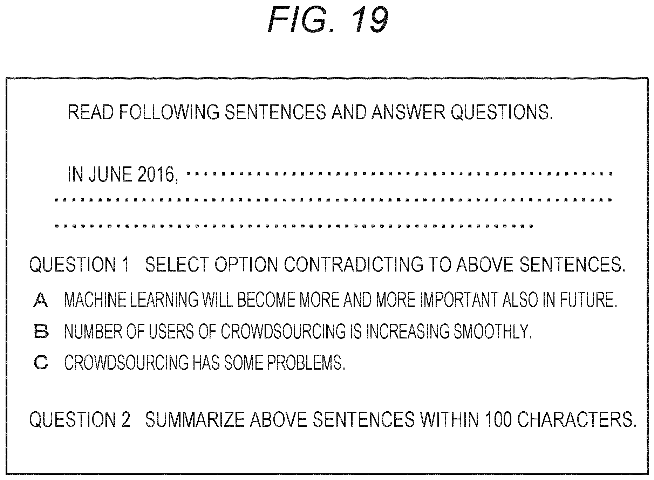

Fig. 19 illustrates an example of sentence problem. This problem includes sentences as a subject of this problem, and small questions of Question 1 and Question 2.

For example, feature amounts generated using BoWs, N-gram, RNN or the like, sentence lengths, and feature amounts such as vocabulary numbers (hereinafter referred to as sentence feature amounts) are extracted.

Furthermore, for example, the type of problem is extracted as a feature amount from the sentence of Question 1 and the sentence of Question 2. For example, the type of question in Question 1 is "selection of option contradicting above sentences" and the question type in Question 2 is "summarizing above sentences".

Furthermore, for example, feature amounts generated using BoWs, N-gram, RNN, or the like, sentence lengths, and feature amounts such as vocabulary numbers (hereinafter referred to as problem feature amounts) are extracted for the sentences of options in Question 1. In addition, the number of options in Question 1 is extracted as a feature amount.

For example, in estimating the task difficulty level of the problem of Question 1, a feature amount vector including the problem type of Question 1 is used as a task vector, and a feature amount vector including the text feature amount, the problem feature amount of Question 1, and the number of options is used as a sample vector. Then, the task vector and the sample vector are applied to the function f5 of the above Formula (5) to estimate the task difficulty level of Question 1.

Furthermore, in estimating the task difficulty level of the problem of Question 2, a feature amount vector including the problem type of Question 2 is used as the task vector, and a feature amount vector including the text feature amount is used as the sample vector. Then, the task vector and the sample vector are applied to the function f5 of the above Formula (5) to estimate the task difficulty level of Question 2.

As described above, it is possible to estimate the task difficulty level of the problem included in the text and possible to objectively express the difficulty level of the text by the average, maximum, total, etc. of the task difficulty levels of individual problems.

<<3. Modifications and others>>

Hereinafter, modification and others of the above-described embodiments of the present technology will be described.

For example, all or part of the processing of the server 11 may be executed in the client 12. For example, a difficulty level estimation model may be supplied from the server 11 to the client 12, and the task difficulty level may be estimated in the client 12.

Furthermore, for example, input data including a task vector, a sample vector, and an operator vector may be given to the server 11 in learning the difficulty level estimation model or estimating the task difficulty level, and the feature amount extraction in the server 11 may be omitted.

Furthermore, the above-described application example of the present technology is merely illustrative, and the present technology can be applied to various apparatuses, services, or the like, that estimate or use the difficulty level of a task for a person.

In addition, a series of processing described above can be executed in hardware or with software.

In a case where the processing is to be executed with software, note that the program executed by the computer (e.g., server 11 or client 12) may be a program processed in a time series in an order described in the present description, or can be a program processed in required timing such as being called.

Moreover, in the present description, the system represents a set of multiple constituents (devices, modules (components), or the like). In other words, all the constituents may be in a same housing but they do not have to be in the same housing. Accordingly, a plurality of apparatuses, housed in separate housings, connected via a network can be a system. An apparatus in which a plurality of modules is housed in one housing can also be a system.

Furthermore, the embodiments of the present technology are not limited to the above-described embodiments but can be modified in a variety of ways within a scope of the present technology.

For example, the present technology can be configured as a form of cloud computing in which one function is shared in cooperation for processing among a plurality of apparatuses via a network.

Moreover, each of steps described in the above flowcharts can be executed on one apparatus or shared by a plurality of apparatuses for processing.

Furthermore, in a case where one step includes a plurality of stages of processing, the plurality of stages of processing included in the one step can be executed on one apparatus or can be shared by a plurality of apparatuses.

In addition, effects described herein are provided for purposes of exemplary illustration and are not intended to be limiting. Still other effects may also be contemplated.

In addition, the present technology may also be configured as follows, for example.

(1) An information processing apparatus including an estimation unit that estimates a task difficulty level being a difficulty level of a task on the basis of information related to the task.

(2) The information processing apparatus according to (1),
in which the task is defined as one or a combination of two or more of the following: labeling, comparison, enumeration, evaluation, search, answering, solution, investigation, organization, transformation, summarization, association, analogy, generation, recommendation, planning, refining, consultation, conversation, transportation, production, designing, and testing.

(3) The information processing apparatus according to (1) or (2),
in which the estimation unit estimates the task difficulty level on the basis of at least one of a feature amount of the task, a feature amount of a sample as a processing target of the task, and a feature amount of an operator who executes the task.

(4) The information processing apparatus according to (3),
in which the estimation unit estimates the task difficulty levels of tasks of different types on the basis of at least the feature amount of each of the tasks.

(5) The information processing apparatus according to (3) or (4),
in which the estimation unit uses a first model to estimate the task difficulty level on the basis of at least one of the feature amount of the task, the feature amount of the sample, and the feature amount of the operator.

(6) The information processing apparatus according to (5) further including
a first learning unit that performs learning of the first model.

(7) The information processing apparatus according to (6),
in which the first learning unit performs learning of the first model using the feature amount of each of tasks obtained from achievement data of the task difficulty level for each of tasks of each of operators and the feature amount of each of the operators.

(8) The information processing apparatus according to (3), further including
a feature amount extraction unit that extracts at least one of the feature amount of the task, the feature amount of the sample, and the feature amount of the operator.

(9) The information processing apparatus according to any of (1) to (8),
in which the task difficulty level is the difficulty level of the task for a person.

(10) The information processing apparatus according to (9),
in which the task difficulty level is represented on the basis of at least one of an objective criterion of the task and a subjective criterion of the task.

(11) The information processing apparatus according to any of (1) to (10), further including a second learning unit that learns a second model by selecting data for learning the second model that executes the task on the basis of the task difficulty level for each of pieces of data.

(12) The information processing apparatus according to (11),
in which the second learning unit further selects the learning data on the basis of a degree of uncertainty of each of the pieces of data for a machine.

(13) The information processing apparatus according to any of (1) to (12), further including a presentation control unit that controls to present the task difficulty level together with contents of the task in recruiting an operator who executes the task.

(14) The information processing apparatus according to (13),

in which the presentation control unit controls to present the task difficulty level defined for each of operators individually on an operator-by-operator basis.

(15) The information processing apparatus according to any of (1) to (14),

in which the estimation unit estimates the task difficulty level for each of problems included in a text and estimates a difficulty level of the text on the basis of a result of the estimation.

(16) An information processing method including an estimation step of estimating a task difficulty level being a difficulty level of a task on the basis of information related to the task, executed by an information processing apparatus.

(17) A program causing a computer to execute processing including an estimation step of estimating a task difficulty level being a difficulty level of a task on the basis of information related to the task.

REFERENCE SIGNS LIST

| 1 | Information processing system |
|---|---|
| 11 | Server |
| 12 | Client |
| 101 | CPU |
| 201 | Feature amount extraction unit |
| 202 | Task-related processing unit |
| 203 | Presentation control unit |
| 211 | Difficulty level estimation model learning unit |
| 212 | Task difficulty level estimation unit |
| 213 | Task execution model learning unit |
| 214 | Task execution unit |

**Claims**

1. An information processing apparatus comprising
   an estimation unit that estimates a task difficulty level being a difficulty level of a task on the basis of information related to the task.

2. The information processing apparatus according to claim 1,
   wherein the task is defined as one or a combination of two or more of the following: labeling, comparison, enumeration, evaluation, search, answering, solution, investigation, organization, transformation, summarization, association, analogy, generation, recommendation, planning, refining, consultation, conversation, transportation, production, designing, and testing.

3. The information processing apparatus according to claim 1,
   wherein the estimation unit estimates the task difficulty level on the basis of at least one of a feature amount of the task, a feature amount of a sample as a processing target of the task, and a feature amount of an operator who executes the task.

4. The information processing apparatus according to claim 3,
   wherein the estimation unit estimates the task difficulty levels of tasks of different types on the basis of at least the feature amount of each of the tasks.

5. The information processing apparatus according to claim 3,
   wherein the estimation unit uses a first model to estimate the task difficulty level on the basis of at least one of the feature amount of the task, the feature amount of the sample, and the feature amount of the operator.

6. The information processing apparatus according to claim 5, further comprising
   a first learning unit that performs learning of the first model.

**7.** The information processing apparatus according to claim 6,
wherein the first learning unit performs learning of the first model using the feature amount of each of tasks obtained from achievement data of the task difficulty level for each of tasks of each of operators and the feature amount of each of the operators.

**8.** The information processing apparatus according to claim 3, further comprising
a feature amount extraction unit that extracts at least one of the feature amount of the task, the feature amount of the sample, and the feature amount of the operator.

**9.** The information processing apparatus according to claim 1,
wherein the task difficulty level is the difficulty level of the task for a person.

**10.** The information processing apparatus according to claim 9,
wherein the task difficulty level is represented on the basis of at least one of an objective criterion of the task and a subjective criterion of the task.

**11.** The information processing apparatus according to claim 1, further comprising a second learning unit that learns a second model by selecting data for learning the second model that executes the task on the basis of the task difficulty level for each of pieces of data.

**12.** The information processing apparatus according to claim 11,
wherein the second learning unit further selects the learning data on the basis of a degree of uncertainty of each of the pieces of data for a machine.

**13.** The information processing apparatus according to claim 1, further comprising a presentation control unit that controls to present the task difficulty level together with contents of the task in recruiting an operator who executes the task.

**14.** The information processing apparatus according to claim 13,
wherein the presentation control unit controls to present the task difficulty level defined for each of operators individually on an operator-by-operator basis.

**15.** The information processing apparatus according to claim 1,
wherein the estimation unit estimates the task difficulty level for each of problems included in a text and estimates a difficulty level of the text on the basis of a result of the estimation.

**16.** An information processing method comprising an estimation step of estimating a task difficulty level being a difficulty level of a task on the basis of information related to the task, executed by an information processing apparatus.

**17.** A program causing a computer to execute processing including an estimation step of estimating a task difficulty level being a difficulty level of a task on the basis of information related to the task.

# FIG. 1

# FIG. 2

SERVER **11**

| 101 | 102 | 103 |
|-----|-----|-----|
| CPU | ROM | RAM |

**104**

**105** INPUT/OUTPUT INTERFACE

| INPUT UNIT | OUTPUT UNIT | STORAGE UNIT | COMMUNICATION UNIT | DRIVE |
|------------|-------------|--------------|--------------------|-------|
| 106 | 107 | 108 | 109 | 110 |

REMOVABLE MEDIUM **111**

EP 3 471 049 A1

# FIG. 3

**201**

FEATURE AMOUNT
EXTRACTION UNIT

**202**

TASK-RELATED PROCESSING UNIT

**211**

DIFFICULTY LEVEL
ESTIMATION MODEL
LEARNING UNIT

**213**

TASK EXECUTION
MODEL LEARNING
UNIT

**212**

DIFFICULTY LEVEL
ESTIMATION UNIT

**214**

TASK
EXECUTION UNIT

**203**

PRESENTATION
CONTROL UNIT

# FIG. 4

"ATTACH True IN CASE WHERE THERE IS BIRD"

TASK (NATURAL SENTENCE)

SAMPLE (IMAGE)

False
PRODUCT (LABEL)

# FIG. 5

"ATTACH TITLE TO IMAGE"

TASK (NATURAL SENTENCE)

SAMPLE (IMAGE)

"PUPPY"
PRODUCT (TEXT)

# FIG. 6

"ENUMERATE WHAT TO SPEAK
TO TURN UP VOLUME OF DEVICE"

TASK (NATURAL SENTENCE)

⟹

· TURN UP AUDIO
· TURN UP VOLUME
· RAISE AUDIO
· MAKE IT AUDIBLE
· MAKE IT LOUDER
⋮

PRODUCT (TEXT)

# FIG. 7

"DRAW ILLUSTRATION OF FLOWER"

TASK (NATURAL SENTENCE)

⟹

PRODUCT (IMAGE)

# FIG. 8

START DIFFICULTY LEVEL ESTIMATION
MODEL LEARNING PROCESSING

S1

HAS LEARNING DATA
BEEN INPUT?  → No

Yes

EXTRACT FEATURE AMOUNT OF
INPUT DATA OF LEARNING DATA  S2

UPDATE MODEL  S3

S4

Yes ← CONTINUE LEARNING?

No

END

# FIG. 9

# FIG. 10

```
        ⎛  START TASK DIFFICULTY      ⎞
        ⎝ LEVEL ESTIMATION PROCESSING ⎠
                     │
                     ▼
        ┌─────────────────────────┐
        │     EXTRACT FEATURE      │ ～S101
        │  AMOUNT OF INPUT DATA    │
        └─────────────────────────┘
                     │
                     ▼
        ┌─────────────────────────┐
        │      ESTIMATE TASK       │ ～S102
        │    DIFFICULTY LEVEL      │
        └─────────────────────────┘
                     │
                     ▼
        ┌─────────────────────────┐
        │ OUTPUT TASK DIFFICULT LEVEL │ ～S103
        └─────────────────────────┘
                     │
                     ▼
                ⎛  END  ⎞
                ⎝       ⎠
```

# FIG. 11

# FIG. 12

# FIG. 13

TAG FLOWER TYPE TO IMAGE
FEE PER TAG: THREE YEN

TAG BIRD TYPE TO IMAGE
FEE PER TAG: THREE YEN

## FIG. 14

| | | |
|---|---|---|
| TASK INSTRUCTION | TAG BIRD TYPE TO IMAGE | 301 |
| FEE PER SAMPLE [YEN] | 3 | 302 |
| NUMBER OF SAMPLES | 1,000 | 303 |

ESTIMATED REQUIRED TIME PER SAMPLE    MINIMUM TIME: NINE SECONDS / AVERAGE TIME: 32 SECONDS / MAXIMUM TIME: 121 SECONDS

ESTIMATED TASK COMPLETION TIME FOR ALL SAMPLES    2016/04/27 20:50 (IN 12 HOURS AND 32 MINUTES)

CANCEL      ORDER

304      305

## FIG. 15

TAG FLOWER TYPE TO IMAGE
PAY PER TAG: THREE YEN
ESTIMATED REQUIRED TIME: 15 SECONDS
ESTIMATED HOURLY PAY: 720 YEN

TAG BIRD TYPE TO IMAGE
PAY PER TAG: THREE YEN
ESTIMATED REQUIRED TIME: 60 SECONDS
ESTIMATED HOURLY PAY: 180 YEN

## FIG. 16

TAG FLOWER TYPE TO IMAGE
PAY PER TAG: THREE YEN
ESTIMATED REQUIRED TIME: 30 SECONDS
ESTIMATED HOURLY PAY: 360 YEN

TAG BIRD TYPE TO IMAGE
PAY PER TAG: THREE YEN
ESTIMATED REQUIRED TIME: 20 SECONDS
ESTIMATED HOURLY PAY: 540 YEN

# FIG. 17

FIRST-LEVEL HIERARCHY

| SELECTION (SELECT SAMPLE MEETING CONDITION) |
| COMPARISON (COMPARE PLURALITY OF SAMPLES) |

⋮

| ENUMERATION (INDICATE SAMPLE SATISFYING CONDITION) |

SECOND-LEVEL HIERARCHY

| IMAGE |
| TEXT |

⋮

| SOUND |

THIRD-LEVEL HIERARCHY

| BIRD |
| FLOWER |

⋮

| SHRINE |

COMPLETION OF TASK INSTRUCTION INPUT

# FIG. 18

| PROBLEMS | | FEATURE AMOUNT EXAMPLES |
|---|---|---|
| SOLVE "$x+4 = 3$" | ⟹ | EQUATION, ORDER: 1, MAXIMUM NUMBER OF DIGITS: 1, NUMBER OF TERMS: 3 |
| SOLVE "$x+164 = 922$" | ⟹ | EQUATION, ORDER: 1, MAXIMUM NUMBER OF DIGITS: 3, NUMBER OF TERMS: 3 |
| SOLVE "$x^2+3x = 0$" | ⟹ | EQUATION, ORDER: 2, MAXIMUM NUMBER OF DIGITS: 1, NUMBER OF TERMS: 3 |
| SOLVE "$2(x+4) + 7(2x+1)$" | ⟹ | TRANSFORMATION OF EXPRESSION, ORDER: 1, MAXIMUM NUMBER OF DIGITS: 1, NUMBER OF TERMS: 6 |

EP 3 471 049 A1

# FIG. 19

READ FOLLOWING SENTENCES AND ANSWER QUESTIONS.

IN JUNE 2016, ·················································································

QUESTION 1  SELECT OPTION CONTRADICTING TO ABOVE SENTENCES.

A  MACHINE LEARNING WILL BECOME MORE AND MORE IMPORTANT ALSO IN FUTURE.

B  NUMBER OF USERS OF CROWDSOURCING IS INCREASING SMOOTHLY.

C  CROWDSOURCING HAS SOME PROBLEMS.

QUESTION 2  SUMMARIZE ABOVE SENTENCES WITHIN 100 CHARACTERS.

# EP 3 471 049 A1

<table>
<tr><td colspan="2"><strong>INTERNATIONAL SEARCH REPORT</strong></td><td>International application No.<br>PCT/JP2017/019830</td></tr>
</table>

| A. CLASSIFICATION OF SUBJECT MATTER |
|---|
| *G06Q50/10*(2012.01)i, *G06N99/00*(2010.01)i |

According to International Patent Classification (IPC) or to both national classification and IPC

| B. FIELDS SEARCHED |
|---|
| Minimum documentation searched (classification system followed by classification symbols)<br>G06Q50/10, G06N99/00 |

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2016-40580 A (KDDI Corp.),<br>24 March 2016 (24.03.2016),<br>paragraphs [0026] to [0033], [0053]; fig. 1 to 4, 9<br>(Family: none) | 1-10,15-17 |
| X<br>Y | WO 2015/147029 A1 (Kabushiki Kaisha Ikkyo Technology),<br>01 October 2015 (01.10.2015),<br>paragraphs [0018] to [0026], [0072]<br>(Family: none) | 1-10,16-17<br>13-14 |
| X | JP 2010-211468 A (Toyota Central Research and Development Laboratories, Inc.),<br>24 September 2010 (24.09.2010),<br>paragraphs [0025], [0054] to [0061]; fig. 3<br>(Family: none) | 1-6,8,11-12,<br>16-17 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>21 June 2017 (21.06.17) | Date of mailing of the international search report<br>04 July 2017 (04.07.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

36

**INTERNATIONAL SEARCH REPORT**

International application No.

PCT/JP2017/019830

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2011-118516 A  (NEC Corp.),<br>16 June 2011 (16.06.2011),<br>paragraphs [0031], [0039], [0094] to [0095],<br>[0153]; fig. 2, 8, 15<br>(Family: none) | 1-10,16-17<br>13-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010086928 A

**Non-patent literature cited in the description**

- Computer Sciences Technical Report. Technical Report 2010-09-14. University Wisconsin Madison, 2010